# EUROPÄISCHE PATENTSCHRIFT

(11) **EP 3 548 522 B1**
(45) Veröffentlichungstag und Bekanntmachung des Hinweises auf die Patenterteilung: **06.07.2022**
(21) Anmeldenummer: 17805235.3
(22) Anmeldetag: 04.12.2017
(51) Int. Cl.: C08F 2/48, C08F 220/34, B33Y 70/00, B33Y 10/00, B33Y 30/00

(54) **VERFAHREN ZUR HERSTELLUNG EINES GEGENSTANDES AUS EINEM VORLÄUFER UND VERWENDUNG EINES RADIKALISCH VERNETZBAREN HARZES IN EINEM ADDITIVEN FERTIGUNGSVERFAHREN**
METHOD OF MAKING AN OBJECT FROM A PRECURSOR AND USE OF A RESIN WHICH CAN BE RADICALLY CROSSLINKED BY MEANS OF AN ADDITIVE PRODUCTION METHOD
PROCÉDÉ DE FABRICATION D'UN OBJET À PARTIR D'UN PRÉCURSEUR ET UTILISATION D'UNE RÉSINE RÉTICULABLE PAR VOIE RADICALAIRE DANS UN PROCÉDÉ DE FABRICATION ADDITIVE

(30) Priorität: 05.12.2016 EP 16202219
(43) Veröffentlichungstag der Anmeldung: 09.10.2019
(73) Patentinhaber: Covestro Deutschland AG, 51373 Leverkusen (DE)
(72) Erfinder: ACHTEN, Dirk, 51375 Leverkusen (DE); BÜSGEN, Thomas, 51377 Leverkusen (DE); GOLLING, Florian, 40477 Düsseldorf (DE); WAGNER, Roland, 51375 Leverkusen (DE); TOMCZYK, Christoph, 51379 Leverkusen (DE); TILLACK, Jörg, 42699 Solingen (DE); EGGERT, Christoph, 50733 Köln (DE); LAAS, Hans-Josef, 51519 Odenthal (DE); STEMPFLE, Florian, Johannes, 50825 Köln (DE)
(74) Vertreter: Davepon, Björn
(86) Internationale Anmeldenummer: PCT/EP2017/081365
(87) Internationale Veröffentlichungsnummer: WO 2018/104223

(56) Entgegenhaltungen:
- WO-A1-2007/002965
- WO-A1-2015/107066
- WO-A1-2015/187933
- DE-A1-102005 044 920
- US-A1- 2009 304 952
- US-A1- 2015 072 293
- US-A1- 2016 136 889
- US-A1- 2016 137 838

## Beschreibung

Die vorliegende Erfindung betrifft ein Verfahren zur Herstellung eines Gegenstandes aus einem Vorläufer, umfassend die Schritte:
I) Abscheiden eines radikalisch vernetzten Harzes auf einem Träger, so dass eine Lage eines mit dem Träger verbundenen Aufbaumaterials erhalten wird, welche einem ersten ausgewählten Querschnitt des Vorläufers entspricht;
II) Abscheiden eines radikalisch vernetzten Harzes auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist;
III) Wiederholen des Schritts II), bis der Vorläufer gebildet ist;
wobei das Abscheiden eines radikalisch vernetzten Harzes wenigstens in Schritt II) durch Einwirken von Energie auf einen ausgewählten Bereich eines radikalisch vernetzbaren Harzes, entsprechend dem jeweils ausgewählten Querschnitt des Gegenstandes, erfolgt und wobei das radikalisch vernetzbare Harz eine Viskosität (23 °C, DIN EN ISO 2884-1) von ≥ 5 mPas bis ≤ 100000 mPas aufweist.

Die Erfindung betrifft weiterhin die Verwendung eines radikalisch vernetzbaren Harzes, welches eine Viskosität (23 °C, DIN EN ISO 2884-1) von ≥ 5 mPas bis ≤ 100000 mPas aufweist, in einem additiven Fertigungsverfahren und ein Polymer, das aus der Vernetzung eines solchen Harzes erhältlich ist.

Die Blockierung von Polyisocyanaten zum zeitweisen Schutz der Isocyanat-Gruppen ist eine seit langem bekannte Arbeitsmethode und wird um Beispiel in Houben-Weyl, Methoden der organischen Chemie XIV/2, S. 61-70 beschrieben. Hierunter fallen auch Uretdiongruppen-haltigen Polyisocyanate, in denen zwei der Isocyanatgruppen in latenter Form vorliegen.

US 2015/072293 A1 offenbart ein additives Fertigungsverfahren unter Verwendung eines Photopolymers, in dem photohärtbare Polyurethan-Zusammensetzungen als besonders geeignete Materialien angesehen werden. Solche Zusammensetzungen enthalten ein Polyurethan auf der Basis eines aliphatischen Diisocyanats, Poly(hexamethylenisophthalatglycol) und optional 1,4-Butandiol sowie einen polyfunktionellen Acrylatester, einen Photoinitiator und ein Antioxidans (US 4,337,130). Photohärtbare thermoplastische Polyurethanelastomere können photoreaktive Diacetylendiole als Kettenverlängerer enthalten.

US 2016/136889 A1 und US 2016/137838 A1 betreffen ebenfalls additive Fertigungsverfahren unter Verwendung eines Photopolymers. Es können über einen zweistufigen Mechanismus härtende polymerisierbare Flüssigkeiten eingesetzt werden, welche blockierte funktionelle Gruppen und thermisch spaltbare Blockierungsgruppen enthalten. In einigen Ausführungsformen liegt ein reaktives geblocktes Prepolymer vor, welches durch Reaktion eines Diisocyanats mit einem Amino(meth)acrylatmonomer-Blockierungsreagenz wie tert.-Butylaminoethylmethacrylat (TBAEMA), tert.-Pentylaminoethylmethacrylat (TPAEMA), tert.-Hexylaminoethylmethacrylat (THAEMA), tert.-Butylaminopropylmethacrylat (TBAPMA), Acrylat-Analoga hiervon oder deren Mischungen erhältlich ist (US 2013/0202392 A1). Es wird ausgeführt, dass während einer thermischen Härtung das Blockierungsmittel gespalten wird und das Diisocyanat-Prepolymer wieder erhalten wird. Dieses reagiert schnell mit Kettenverlängerern oder weiteren Weichsegmenten unter Ausbildung eines thermoplastischen oder duroplastischen Polyurethans, Polyureas oder Copolymers hiervon. Das UV-härtbare (meth)acrylat-geblockte Polyurethan wird in diesen Publikationen als "ABPU" bezeichnet.

Der Nachteil von solchen abspaltbaren Blockierungsmitteln ist, dass sie entweder als flüchtige organische Verbindungen (VOC, volatile organic compounds) freigesetzt werden können oder, wie im Fall des ABPU, zwar in ein Polymernetzwerk einpolymerisiert werden können, jedoch aufgrund dieser Randbedingung den Gestaltungsfreiraum bei der Materialwahl für das additive Herstellungsverfahren einschränken.

Eine Aufgabe der vorliegenden Erfindung ist es, mindestens einen Nachteil des Standes der Technik wenigstens zu einem Teil zu überwinden. Weiterhin stellt sich die Erfindung die Aufgabe, ein additives Fertigungsverfahren bereitzustellen, bei dem die hergestellten Gegenstände gleichzeitig eine hohe Auflösung und eine hohe Festigkeit aufweisen können, ohne dass flüchtige organische Verbindungen freigesetzt werden. Schließlich ist eine Aufgabe der Erfindung, solche Gegenstände möglichst kosteneffizient und/oder individualisiert und/oder ressourcenschonend herstellen zu können.

Erfindungsgemäß gelöst wird die Aufgabe durch ein Verfahren gemäß Anspruch 1 und eine Verwendung gemäß Anspruch 13. Ein so erhältliches Polymer ist Gegenstand des Anspruchs 15. Vorteilhafte Weiterbildungen sind in den Unteransprüchen angegeben. Sie können beliebig kombiniert werden, sofern sich aus dem Kontext nicht eindeutig das Gegenteil ergibt.

Ein erfindungsgemäßes Verfahren zur Herstellung eines Gegenstandes aus einem Vorläufer umfasst die Schritte:
I) Abscheiden eines radikalisch vernetzten Harzes auf einem Träger, so dass eine Lage eines mit dem Träger verbundenen Aufbaumaterials erhalten wird, welche einem ersten ausgewählten Querschnitt des Vorläufers entspricht;
II) Abscheiden eines radikalisch vernetzten Harzes auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist;
III) Wiederholen des Schritts II), bis der Vorläufer gebildet ist;
wobei das Abscheiden eines radikalisch vernetzten Harzes wenigstens in Schritt II) durch Einwirken von Energie auf einen ausgewählten Bereich eines radikalisch vernetzbaren Harzes, entsprechend dem jeweils ausgewählten Querschnitt des Gegenstandes, erfolgt und wobei das radikalisch vernetzbare Harz eine Viskosität (23 °C, DIN EN ISO 2884-1) von ≥ 5 mPas bis ≤ 100000 mPas aufweist.

Das radikalisch vernetzbare Harz umfasst eine härtbare Komponente, in der mit einem Blockierungsmittel blockierte NCO-Gruppen, Verbindungen mit mindestens zwei Zerewitinoff-aktiven H-Atomen sowie olefinische C=C-Doppelbindungen vorliegen, wobei das Blockierungsmittel ein Isocyanat ist oder das Blockierungsmittel derart ausgewählt ist, dass nach Deblockierung der NCO-Gruppe keine Freisetzung des Blockierungsmittels als freies Molekül oder als Teil von anderen Molekülen oder Molekülteilen stattfindet.

Im erfindungsgemäßen Verfahren wird nach Schritt III) weiterhin Schritt IV) durchgeführt:
IV) Behandeln des nach Schritt III) erhaltenen Vorläufers bei Bedingungen, die ausreichen, um im radikalisch vernetzten Harz des erhaltenen Vorläufers vorliegende NCO-Gruppen zumindest teilweise zu deblockieren und die dadurch erhaltenen funktionellen Gruppen mit Verbindungen mit mindestens zwei Zerewitinoff-aktiven H-Atomen zur Reaktion zu bringen, so dass der Gegenstand erhalten wird.

Im erfindungsgemäßen Verfahren wird somit der Gegenstand in zwei Herstellungsabschnitten erhalten. Der erste Herstellungsabschnitt kann als Aufbauabschnitt angesehen werden. Dieser Aufbauabschnitt lässt sich mittels strahlenoptischer additiver Fertigungsverfahren wie der Stereolithographie oder dem DLP (digital light processing)-Verfahren oder auch mittels Inkjet-Druckverfahren kombiniert mit Strahlenvernetzung realisieren und ist Gegenstand der Schritte I), II) und III). Der zweite Herstellungsabschnitt kann als Härtungsabschnitt angesehen werden und ist Gegenstand des Schritts IV). Hier wird der nach dem Aufbauabschnitt erhaltene Vorläufer oder intermediäre Gegenstand ohne seine Form weiter zu verändern in einen mechanisch dauerhafteren Gegenstand überführt. Das Material, aus dem der Vorläufer im additiven Fertigungsverfahren erhalten wird, wird im Rahmen der vorliegenden Erfindung allgemein als "Aufbaumaterial" bezeichnet.

In Schritt I) des Verfahrens erfolgt das Abscheiden eines radikalisch vernetzten Harzes auf einem Träger. Dieses ist gewöhnlich der erste Schritt in Stereolithographie- und DLP-Verfahren. Auf diese Weise wird eine Lage eines mit dem Träger verbundenen Aufbaumaterials erhalten wird, welche einem ersten ausgewählten Querschnitt des Vorläufers entspricht.

Gemäß der Anweisung von Schritt III) wird Schritt II) so lange wiederholt, bis der gewünschte Vorläufer gebildet ist. In Schritt II) erfolgt das Abscheiden eines radikalisch vernetzten Harzes auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist. Bei der zuvor aufgetragenen Lage des Aufbaumaterials kann es sich um die erste Lage aus Schritt I) oder um eine Lage aus einer vorigen Durchlauf des Schritts II) handeln.

Es ist erfindungsgemäß vorgesehen, dass das Abscheiden eines radikalisch vernetzten Harzes wenigstens in Schritt II) (vorzugsweise auch in Schritt I) durch Belichten und/oder Bestrahlen eines ausgewählten Bereichs eines radikalisch vernetzbaren Harzes, entsprechend dem jeweils ausgewählten Querschnitt des Gegenstandes, erfolgt. Im Kontext der vorliegenden Erfindung werden die Begriffe "radikalisch vernetzbares Harz" und "radikalisch vernetztes Harz" benutzt. Hierbei wird das radikalisch vernetzbare Harz durch das Belichten und/oder Bestrahlen, welches radikalische Vernetzungsreaktionen auslöst, in das radikalisch vernetzte Harz überführt. Unter "Belichten" wird hierbei die Einwirkung von Licht im Bereich zwischen nahem IR- und nahem UV-Licht (1400 nm bis 315 nm Wellenlänge) verstanden. Die übrigen kürzeren Wellenlängenbereiche werden durch den Begriff "Bestrahlen" abgedeckt, zum Beispiel fernes UV-Licht, Röntgenstrahlung, Gammastrahlung und auch Elektronenstrahlung.

Das Auswählen des jeweiligen Querschnitts erfolgt zweckmäßigerweise durch ein CAD-Programm, mit dem ein Modell des herzustellenden Gegenstandes erzeugt wurde. Diese Operation wird auch "Slicing" genannt, und dient als Grundlage für die Steuerung der Belichtung und/oder Bestrahlung des radikalisch vernetzbaren Harzes.

Das radikalisch vernetzbare Harz weist eine Viskosität (23 °C, DIN EN ISO 2884-1) von ≥ 5 mPas bis ≤ 100000 mPas auf. Somit ist es zumindest für die Zwecke der additiven Fertigung als flüssiges Harz anzusehen. Vorzugsweise beträgt die Viskosität ≥ 50 mPas bis ≤ 20000 mPas, mehr bevorzugt ≥ 200 mPas bis ≤ 5000 mPas.

Weiterhin umfasst in dem Verfahren das radikalisch vernetzbare Harz eine härtbare Komponente, in der mit einem Blockierungsmittel blockierte NCO-Gruppen, Verbindungen mit mindestens zwei Zerewitinoff-aktiven H-Atomen sowie olefinische C=C-Doppelbindungen vorliegen, wobei das Blockierungsmittel ein Isocyanat ist oder das Blockierungsmittel derart ausgewählt ist, dass nach Deblockierung der NCO-Gruppe keine Freisetzung des Blockierungsmittels als freies Molekül oder als Teil von anderen Molekülen oder Molekülteilen stattfindet.

Neben der härtbaren Komponente kann das radikalisch vernetzbare Harz auch eine nicht härtbare Komponente umfassen, in der beispielsweise Stabilisatoren, Füllstoffe und dergleichen zusammengefasst sind. In der härtbaren Komponente können die blockierten NCO-Gruppen und die olefinischen C=C-Doppelbindungen in getrennten Molekülen und/oder in einem gemeinsamen Molekül vorliegen. Wenn blockierte NCO-Gruppen und olefinische C=C-Doppelbindungen in getrennten Molekülen vorliegen, kann der nach Schritt IV) des erfindungsgemäßen Verfahrens erhaltene Körper ein interpenetrierendes Polymer-Netzwerk aufweisen.

In dem Verfahren wird weiterhin nach Schritt III) der Schritt IV) durchgeführt. In diesem Schritt erfolgt das Behandeln des nach Schritt III) erhaltenen Vorläufers bei Bedingungen, die ausreichen, um im radikalisch vernetzten Harz des erhaltenen Vorläufers vorliegende NCO-Gruppen zumindest teilweise zu deblockieren und die dadurch erhaltenen funktionellen Gruppen mit Verbindungen mit mindestens zwei Zerewitinoff-aktiven H-Atomen zur Reaktion zu bringen, so dass der Gegenstand erhalten wird. Insofern muss eine Deblockierung der NCO-Gruppen im Sinne der vorliegenden Erfindung nicht zwangsläufig bedeuten, dass wieder eine NCO-Gruppe erhalten wird. Vielmehr kann dieses auch bedeuten, dass eine funktionelle Gruppe wie eine Acylkation-Gruppe nach Deblockierung erhalten werden kann, welche mit anderen funktionellen Gruppen, die Zerewitinoff-aktive H-Atomen aufweisen, unter Ausbildung einer kovalenten Bindung reagiert.

Vorzugsweise wird die Reaktion durchgeführt, bis ≤ 50%, bevorzugt ≤ 30% und mehr bevorzugt ≤ 20% der ursprünglich in der härtbaren Komponente vorhandenen blockierten Isocyanat-Gruppen noch vorhanden sind. Dieses lässt sich mittels Oberflächen-IR-Spektroskopie bestimmen. Es ist weiter bevorzugt, dass in Schritt IV) ≥ 50%, ≥ 60%, ≥ 70% oder ≥ 80%, der in der härtbaren Komponente deblockierten NCO-Gruppen mit der Verbindung mit mindestens zwei Zerewitinoff-aktiven H-Atomen reagieren.

Es ist bevorzugt, dass Schritt IV) erst dann durchgeführt wird, wenn das gesamte Aufbaumaterial des Vorläufers seinen Gelpunkt erreicht hat. Der Gelpunkt wird als erreicht angesehen, wenn in einer dynamisch-mechanischen Analyse (DMA) mit einem Platte/Platte-Oszillationsviskosimeter gemäß ISO 6721-10 bei 20 °C sich die Graphen des Speichermoduls G' und des Verlustmoduls G" kreuzen. Gegebenenfalls wird der Vorläufer weiterer Belichtung und/oder Bestrahlung zur Vervollständigung der radikalischen Vernetzung ausgesetzt. Das radikalisch vernetzte Harz kann ein Speichermodul G' (DMA, Platte/Platte-Oszillationsviskosimeter gemäß ISO 6721-10 bei 20 °C und einer Scherrate von 1/s) von ≥ 10⁶ Pa aufweisen.

Das radikalisch vernetzbare Harz kann weiterhin Additive wie Füllstoffe, UV-Stabilisatoren, Radikalinhibitoren, Antioxidantien, Formtrennmittel, Wasserfänger, Slipadditive, Entschäumer, Verlaufsmittel, Rheologieadditive, Flammschutzmittel und/oder Pigmente enthalten. Diese Hilfs- und Zusatzmittel, ausgenommen Füllstoffe und Flammschutzmittel, liegen üblicherweise in einer Menge von weniger als 10 Gew.-%, vorzugsweise weniger als 5 Gew.-%, besonders bevorzugt bis zu 3 Gew.-%, bezogen auf das radikalisch vernetzbare Harz vor. Flammschutzmittel liegen üblicherweise in Mengen von höchstens 70 Gew.-%, vorzugsweise höchstens 50 Gew.-%, besonders bevorzugt höchstens 30 Gew.-%, berechnet als Gesamtmenge an eingesetzten Flammschutzmitteln bezogen auf das Gesamtgewicht des radikalisch vernetzbaren Harzes vor.

Geeignete Füllstoffe sind beispielsweise Ruß, Silica, AlOH₃, CaCO₃, Metallpigmente wie TiO₂ und weitere bekannte übliche Füllstoffe. Diese Füllstoffe werden vorzugsweise in Mengen von höchstens 70 Gew.-%, bevorzugt höchstens 50 Gew.-%, besonders bevorzugt höchstens 30 Gew.-%, berechnet als Gesamtmenge an eingesetzten Füllstoffen bezogen auf das Gesamtgewicht des radikalisch vernetzbaren Harzes, eingesetzt.

Geeignete UV-Stabilisatoren können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxybenzylidenmalonsäuredimethylester, 4-Methoxybenzylidenmalonsäurediethylester, 4-Butoxybenzylidenmalonsäuredimethylester. Diese bevorzugten Lichtstabilisatoren können sowohl einzeln als auch in beliebigen Kombinationen untereinander zum Einsatz kommen.

Besonders bevorzugte UV-Stabilisatoren sind solche, die Strahlung einer Wellenlänge < 400 nm zu einem großen Anteil absorbieren. Hierzu zählen beispielsweise die genannten Benztriazolderivate. Ganz besonders bevorzugte UV-Stabilisatoren sind 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol und/oder 2-(5-Chlor-2H-benzotriazol-2-yl)-4,6-bis(1,1-dimethylethyl)phenol.

Gegebenenfalls werden ein oder mehrere der beispielhaft genannten UV-Stabilisatoren dem radikalisch vernetzbaren Harz vorzugsweise in Mengen von 0,001 bis 3,0 Gew.-%, besonders bevorzugt 0,005 bis 2 Gew.-%, berechnet als Gesamtmenge an eingesetzten UV-Stabilisatoren bezogen auf das Gesamtgewicht des radikalisch vernetzbaren Harzes, zugesetzt.

Geeignete Antioxidantien sind vorzugsweise sterisch gehinderten Phenole, welche vorzugsweise ausgewählt werden können aus der Gruppe, bestehend aus 2,6-Di-tert-butyl-4-methylphenol (Ionol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden.

Diese Antioxidantien werden vorzugsweise in Mengen von 0,01 bis 3,0 Gew.-%, besonders bevorzugt 0,02 bis 2,0 Gew.-%, berechnet als Gesamtmenge an eingesetzten Antioxidantien bezogen auf das Gesamtgewicht des radikalisch vernetzbaren Harze, eingesetzt.

Ausführungsformen und weitere Aspekte der vorliegenden Erfindung werden im Folgenden erläutert. Sie können beliebig miteinander kombiniert werden, sofern sich aus dem Kontext nicht eindeutig das Gegenteil ergibt.

In einer bevorzugten Ausführungsform ist das Blockierungsmittel ausgewählt aus der Gruppe bestehend aus organischen Isocyanaten, Lactamen, Glycerincarbonat, einer Verbindung gemäß der allgemeinen Formel (I): 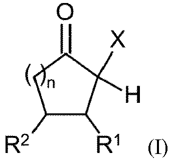 in welcher X eine elektronenziehende Gruppe, R¹ und R² unabhängig voneinander die Reste H, C₁-C₂₀-(Cyclo)alkyl, C₆-C₂₄-Aryl, C₁-C₂₀-(Cyclo)alkylester oder -amid, C₆-C₂₄-Arylester oder -amid, gemischt aliphatisch/aromatische Reste mit 1 bis 24 Kohlenstoffatomen, die auch Teil eines 4 bis 8-gliedrigen Ringes sein können, darstellen und n eine ganze Zahl von 0 bis 5 ist,
oder einer Kombination aus mindestens zwei hiervon.

Bei der elektronenziehenden Gruppe X kann es sich um alle Substituenten handeln, die zu einer CH-Azidität des α-ständigen Wasserstoffes führen. Dies können beispielsweise Estergruppen, Amidgruppen, Sulfoxidgruppen, Sulfongruppen, Nitrogruppen, Phosphonatgruppen, Nitrilgruppen, Isonitrilgruppen, Polyhalogenalkylgruppen, Halogene wie Fluor, Chlor oder Carbonylgruppen sein. Bevorzugt sind Nitril- und Estergruppen, besonders bevorzugt sind Carbonsäuremethylester- und Carbonsäureethylestergruppen. Geeignet sind auch Verbindungen der allgemeinen Formel (I), deren Ring gegebenenfalls Heteroatome, wie Sauerstoff-, Schwefel-, oder Stickstoffatome enthalten. Bevorzugt weist das aktivierte cyclische Keton der Formel (I) eine Ringgröße von 5 (n = 1) und 6 (n = 2) auf.

Bevorzugte Verbindungen der allgemeinen Formel (I) sind Cyclopentanon-2-carboxymethylester und -carboxyethylester, Cyclopentanon-2-carbonsäurenitril, Cyclohexanon-2-carboxymethylester und -carboxyethylester oder Cyclopentanon-2-carbonylmethyl. Besonders bevorzugt sind Cyclopentanon-2-carboxymethylester und -carboxyethylester sowie Cyclohexanon-2-carboxymethylester und-carboxyethylester. Die Cyclopentanonsysteme sind technisch leicht durch eine Dieckmann-Kondensation von Adipinsäuredimethylester oder Adipinsäurediethylester erhältlich. Cyclohexanon-2-carboxymethylester kann durch Hydrierung von Salicylsäuremethylester hergestellt werden.

Bei Verbindungen des Typs (I) verlaufen die Blockierung der NCO-Gruppen, die Deblockierung und die Umsetzung mit Polyolen oder Polyaminen nach dem folgenden beispielhaften Schema:

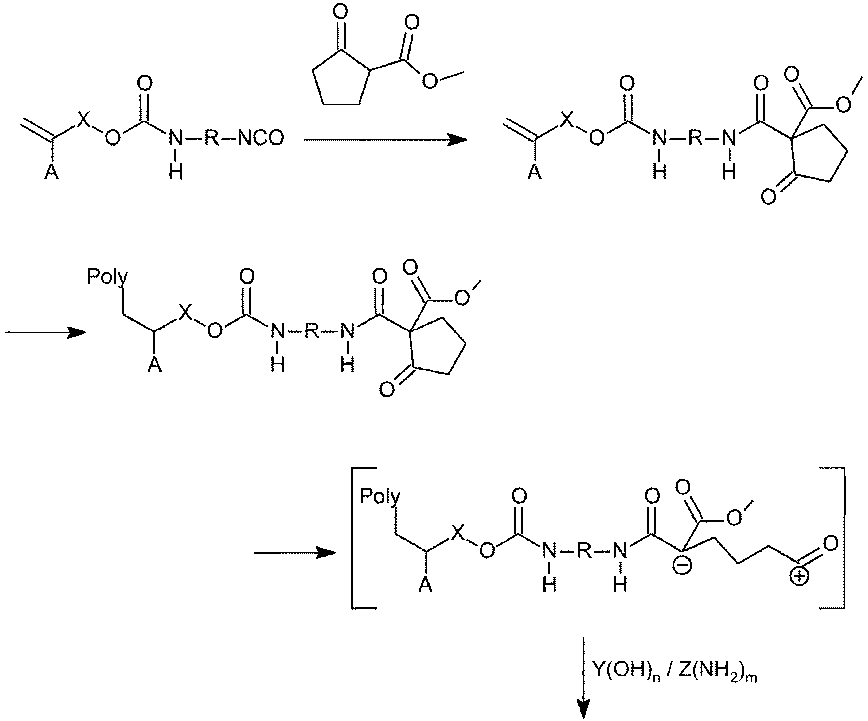

Hierbei steht A für einen beliebigen Rest, vorzugsweise für Wasserstoff oder Alkyl. Die Gruppe X verbindet den Alkenylteil des Moleküls mit dem restlichen Molekül und ist insbesondere eine Carbonylgruppe. Die Gruppe R steht für einen weiteren beliebigen Rest. Beispielsweise kann das Ausgangsmolekül für das obige Schema als das Additionsprodukt von einen Molekül Hydroxyalkyl(meth)acrylat wie 2-Hydroxyalkylmethacrylat (HEMA) an ein Diisocyanat oder ein difunktionelles NCO-terminiertes Prepolymer unter Ausbildung einer Urethangruppe verstanden werden. Das β-Diketon der allgemeinen Formel (I), in dem R¹ und R² für H und X für C(O)OCH₃ steht, addiert mit seinem C-H-aciden C-Atom an die freie NCO-Gruppe unter Ausbildung einer weiteren Urethangruppe. Auf diese Weise wird ein radikalisch polymerisierbares Molekül mit einer blockierten NCO-Gruppe erhalten. Die radikalische Polymerisation der C=C-Doppelbindungen führt zur Ausbildung eines Polymers, dessen Kette schematisch mit "Poly" in dem obigen Schema bezeichnet wurde. Anschließend kann die NCO-Gruppe wieder deblockiert werden. Hierzu wird der Cyclopentanon-Ring geöffnet, wobei sich formal ein Carbanion und ein Acylkation bilden. Dieses ist durch die in eckigen Klammern abgebildete Zwischenstufe symbolisiert. Ein Polyol Y(OH)ₙ oder ein Polyamin Z(NH₂)ₘ (sekundäre Amine sind selbstverständlich auch möglich) mit n ≥ 2 und m ≥ 2 addieren formal an das Acylkation mit ihrer OH-Gruppe oder Aminogruppe, wobei weiterhin ein H-Atom zum Carbanion-C-Atom wandert. Wie leicht zu erkennen ist, bleibt das Blockierungsmittel in dem Polymermolekül kovalent gebunden.

Die Blockierung von NCO-Gruppen, deren Deblockierung und Reaktion der nach der Deblockierung erhaltenen funktionellen Gruppen mit Polyolen oder Polyaminen ausgehend von Glycerincarbonat ist beispielhaft in dem nachfolgenden Schema gezeigt:

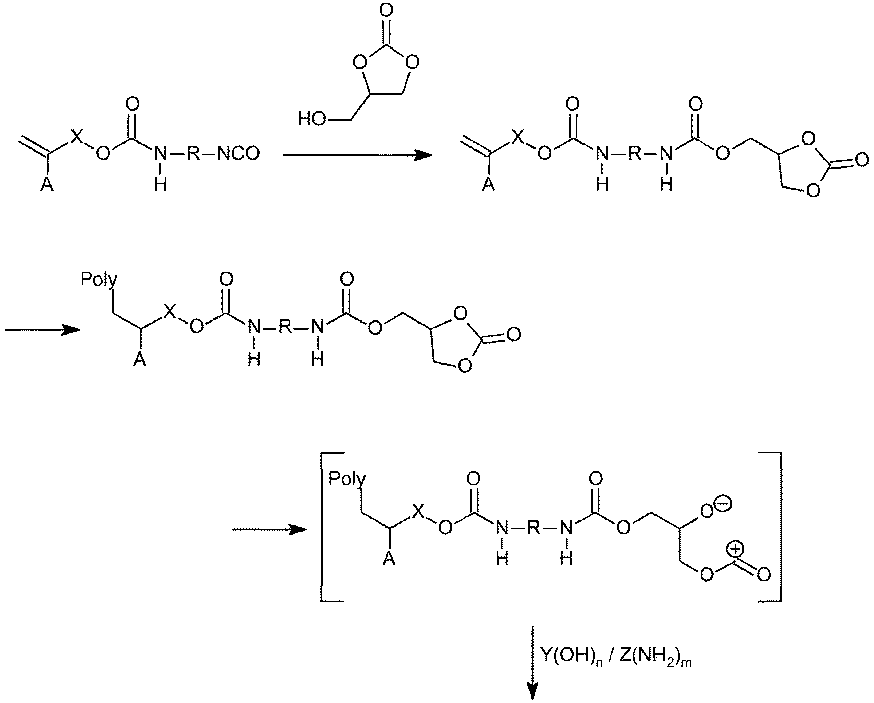

Auch hier steht A für einen beliebigen Rest, vorzugsweise für Wasserstoff oder Alkyl. Die Gruppe X verbindet den Alkenylteil des Moleküls mit dem restlichen Molekül und ist insbesondere eine Carbonylgruppe. Die Gruppe R steht für einen weiteren beliebigen Rest. Beispielsweise kann das Ausgangsmolekül für das obige Schema als das Additionsprodukt von einen Molekül Hydroxyalkyl(meth)acrylat wie 2-Hydroxyalkylmethacrylat (HEMA) an ein Diisocyanat oder ein difunktionelles NCO-terminiertes Prepolymer unter Ausbildung einer Urethangruppe verstanden werden. Das Glycerincarbonat addiert mit seiner freien OH-Gruppe an die freie NCO-Gruppe unter Ausbildung einer weiteren Urethangruppe. Auf diese Weise wird ein radikalisch polymerisierbares Molekül mit einer blockierten NCO-Gruppe erhalten. Die radikalische Polymerisation der C=C-Doppelbindungen führt zur Ausbildung eines Polymers, dessen Kette schematisch mit "Poly" in dem obigen Schema bezeichnet wurde. Anschließend kann die NCO-Gruppe wieder deblockiert werden. Hierzu wird der cyclische Carbonatring geöffnet, wobei sich formal ein Alkoxidion und ein Acylkation bilden. Dieses ist durch die in eckigen Klammern abgebildete Zwischenstufe symbolisiert. Ein Alkohol Y(OH)ₙ oder ein Amin Z(NH₂)ₘ (sekundäre Amine sind selbstverständlich auch möglich) mit n ≥ 2 und m ≥ 2 addieren formal an das Acylkation mit ihrer OH-Gruppe oder Aminogruppe, wobei weiterhin ein Proton zum Carbanion-C-Atom wandert. Wie leicht zu erkennen ist, bleibt das Blockierungsmittel in dem Polymermolekül kovalent gebunden.

Im Fall der Lactame ist ε-Caprolactam bevorzugt. Das Blockieren und Deblockieren verläuft analog zu den beiden zuvor gezeigten Schemata. Unter Ausbildung einer Harnstoffgruppe addiert die N-H-Gruppe des Lactams an die freie NCO-Gruppe. Nach Polymerisation der C=C-Doppelbindungen kann der Lactamring geöffnet werden. Hierbei entstehen wieder formal ein Acylkation und ein negativ geladenes N-Atom. Alkohole oder Amine können an das Acylkation addieren und das überzählige Proton an das negativ geladene N-Atom übergeben. Auch hier verbleibt das Blockierungsmittel kovalent in dem Polymermolekül gebunden.

Bevorzugt ist der Fall, dass das Blockierungsmittel ein organisches Isocyanat ist. Dann kann die zu blockierende NCO-Gruppe unter Uretdionbildung mit der NCO-Gruppe des Blockierungsmittels reagieren. Die Rückreaktion während Schritt IV) des Verfahrens führt wieder zur Bildung der NCO-Gruppen, welche mit den zur Verfügung stehenden Kettenverlängerern reagieren. Es ist besonders bevorzugt, wenn das Blockierungsmittel und die Verbindung mit der zu blockierenden NCO-Gruppe identisch sind. Dann beinhaltet die Blockierung eine Dimerisierung der betreffenden Verbindung. Dieses und die Reaktion mit Polyol und Polyamin ist in dem nachfolgenden Schema beispielhaft gezeigt.

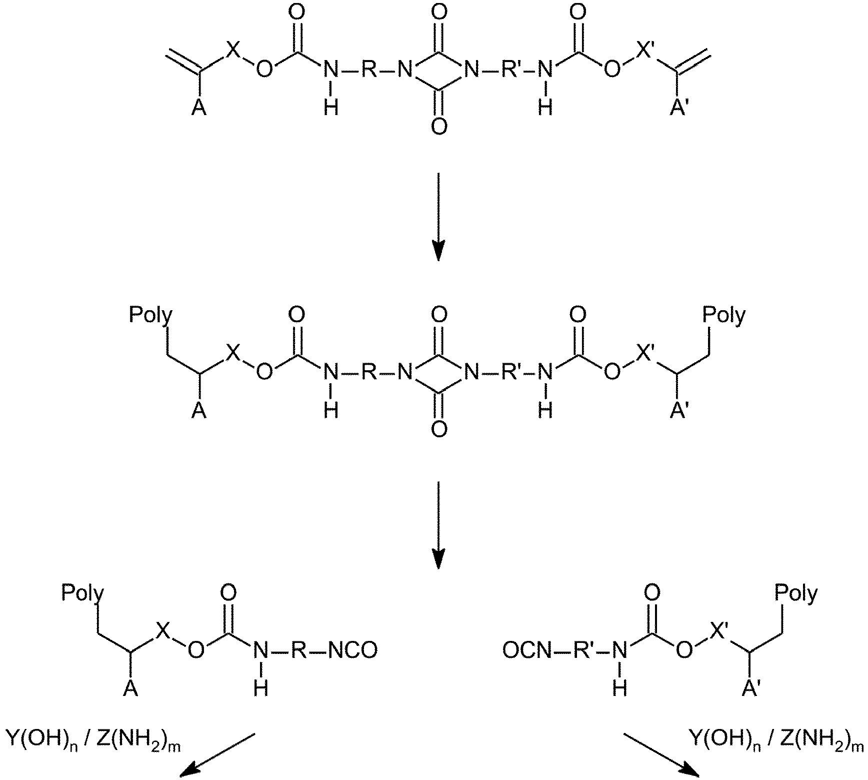

Hier stehen A und A' für einen beliebigen Rest, vorzugsweise für Wasserstoff oder Alkyl. Die Gruppen X und X' verbinden die Alkenylteil der Moleküle mit dem restlichen Molekül und sind insbesondere Carbonylgruppen. Die Gruppen R und R' steht für weitere beliebige Reste. Beispielsweise können die monomeren Ausgangsmoleküle für das obige Schema als Additionsprodukte von einen Molekül Hydroxyalkyl(meth)acrylat wie 2-Hydroxyalkylmethacrylat (HEMA) an ein Diisocyanat oder ein difunktionelles NCO-terminiertes Prepolymer unter Ausbildung einer Urethangruppe verstanden werden. Im Gegensatz zu den vorigen näher erläuterten Blockierungsmitteln erfolgt die Blockierung der NCO-Gruppen durch andere NCO-Gruppen unter Dimerisierung, das heißt unter Ausbildung eines viergliedrigen Uretdion-Rings. Nach radikalischer Polymerisation der C=C-Doppelbindungen ist das Dimer mit den wechselseitig blockierten NCO-Gruppen in die gleiche oder zwei verschiedene Polymerketten "Poly" eingebunden. Die Deblockierung führt zur Öffnung des Uretdion-Ringes unter Rückbildung von zwei NCO-Gruppen. Diese können dann mit Alkoholen oder Aminen umgesetzt werden. Alkohole Y(OH)ₙ oder Amine Z(NH₂)ₘ (sekundäre Amine sind selbstverständlich auch möglich) mit n ≥ 2 und m ≥ 2 addieren an die NCO-Gruppen unter Ausbildung von Urethan- oder Harnstoffgruppen.

In einer weiteren bevorzugten Ausführungsform sind in der härtbaren Komponente die Verbindungen mit mindestens zwei Zerewitinoff-aktiven H-Atomen ausgewählt aus der Gruppe bestehend aus Polyaminen, Polyolen oder einer Kombination hiervon. Dies können beispielsweise niedermolekulare Diole (z. B. 1,2-Ethandiol, 1,3- bzw. 1,2-Propandiol, 1,4-Butandiol), Triole (z.B. Glycerin, Trimethylolpropan) und Tetraole (z. B. Pentaerythrit) sein, kurzkettige Polyamine aber auch höhermolekulare Polyhydroxyverbindungen wie Polyetherpolyole, Polyesterpolyole, Polycarbonatpolyole, Polysiloxanpolyole, Polyamine und Polyetherpolyamine sowie Polybutadienpolyole.

In einer weiteren bevorzugten Ausführungsform umfasst die härtbare Komponente eine härtbare Verbindung, welche mit dem Blockierungsmittel blockierte NCO-Gruppen und olefinische C=C-Doppelbindungen aufweist.

In einer weiteren bevorzugten Ausführungsform liegen in der härtbaren Verbindung die olefinischen Doppelbindungen zumindest teilweise in Form von (Meth)Acrylatgruppen vor.

Die härtbare Verbindung ist vorzugsweise eine Verbindung, die erhältlich ist aus der Dimerisierung eines Diisocyanats zu einem NCO-terminierten Uretdion, gefolgt von der Umsetzung der NCO-Gruppen mit einem Hydroxyalkyl(meth)acrylat.

Geeignete Diisocyanate zur Herstellung der NCO-terminierten Uretdione sind beispielsweise solche, die ein Molekulargewicht im Bereich von 140 bis 400 g/mol aufweisen, mit aliphatisch, cycloaliphatisch, araliphatisch und/oder aromatisch gebundenen Isocyanatgruppen, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H₁₂MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xyxlylendiisocyanat; XDI), 1,3- und 1,4-Bis(1-isocyanato-1-methylethyl)-benzol (TMXDI) und Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin sowie beliebige Gemische solcher Diisocyanate.

Ferner können erfindungsgemäß auch aliphatische und / oder aromatische Isocyanat-Endgruppen tragende Prepolymere, wie beispielsweise aliphatische oder aromatische Isocyanat-Endgruppentragende Polyether-, Polyester-, Polyacrylat, Polyepoxyd oder Polycarbonat-Prepolymere als Edukte der Uretdion-Bildung eingesetzt werden.

Geeignete Hydroxyalkyl(meth)acrylate sind unter anderem Alkoxyalkyl(meth)acrylate mit 2 bis 12 Kohlenstoffatomen im Hydroxyalkylrest. Bevorzugt sind 2-Hydroxyethylacrylat, das bei der Anlagerung von Propylenoxid an Acrylsäure entstehende Isomerengemisch oder 4-Hydroxybutylacrylat.

Die Reaktion zwischen dem Hydroxyalkyl(meth)acrylat und dem NCO-terminierten Uretdion kann durch die üblichen Urethanisierungskatalysatoren wie DBTL katalysiert werden. Die erhaltene härtbare Verbindung kann ein zahlenmittleres Molekulargewicht Mₙ von ≥ 200 g/mol bis ≤ 5000 g/mol aufweisen. Vorzugsweise beträgt dieses Molekulargewicht ≥ 300 g/mol bis ≤ 4000 g/mol, mehr bevorzugt ≥ 400 g/mol bis ≤ 3000 g/mol.

Besonders bevorzugt ist eine härtbare Verbindung, die aus der Reaktion eines NCO-terminierten Uretdions mit Hydroxethyl(meth)acrylat erhalten wurde, wobei das NCO-terminierte Uretdion aus der Dimerisierung von 1,6-Hexamethylendiisocyanat, 1,5-Pentamethylendiisocyanat oder IPDI erhalten wurde. Diese härtbare Verbindung hat ein zahlenmittleres Molekulargewicht Mₙ von ≥ 400 g/mol bis ≤ 3000 g/mol und

In einer weiteren bevorzugten Ausführungsform umfasst das radikalisch vernetzbare Harz weiterhin einen Radikalstarter, gegebenenfalls auch einen Katalysator und/oder einen Inhibitor. Um eine unerwünschte Erhöhung der Viskosität des radikalisch vernetzbaren Harzes zu verhindern, kann der Radikalstarter erst unmittelbar vor Beginn des erfindungsgemäßen Verfahrens dem Harz hinzugefügt werden.

Als Radikalstarter kommen thermische und/oder photochemische Radikalstarter (Photoinitiatoren) in Betracht. Es ist auch möglich, dass gleichzeitig thermische und photochemische Radikalstarter eingesetzt werden. Geeignete thermische Radikalstarter sind beispielsweise Azobisisobutyronitril (AIBN), Dibenzoylperoxid (DBPO), Di-tert-butylperoxid und/oder anorganische Peroxide wie Peroxodisulfate.

Bei den Photoinitiatoren wird prinzipiell zwischen zwei Typen unterschieden, dem unimolekularen Typ (I) und dem bimolekularen Typ (II). Geeignete Typ (I)-Systeme sind aromatische Ketonverbindungen, wie z. B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind Typ (II)-Initiatoren wie Benzoin und seine Derivate, Benzilketale, Acylphosphinoxide, 2,4,6-Trimethylbenzoyldiphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Spezielle Beispiele sind Irgacur^{®}500 (eine Mischung von Benzophenon und (1-Hydroxycyclohexyl)phenylketon, Fa. Ciba, Lampertheim, DE), Irgacure^{®}819 DW (Phenylbis-(2, 4, 6-trimethylbenzoyl)phosphinoxid, Fa. Ciba, Lampertheim, DE) oder Esacure^{®} KIP EM (Oligo-[2-hydroxy-2-methyl-1-[4-(1-methylvinyl)-phenyl]-propanone], Fa. Lamberti, Aldizzate, Italien) und Bis-(4-methoxybenzoyl)diethylgerman. Es können auch Gemische dieser Verbindungen eingesetzt werden.

In einer weiteren bevorzugten Ausführungsform ist der Radikalstarter ausgewählt aus der Gruppe: α-Hydroxyphenylketon, Benzyldimethylketal, Bis-(4-methoxybenzoyl)diethylgerman und/oder 2,4,6-Trimethylbenzoyldiphenylphosphinoxid

In einer weiteren bevorzugten Ausführungsform beträgt in dem Harz das molare Verhältnis von freien NCO-Gruppen zu Zerewitinoff-aktiven H-Atomen ≤ 0.05 (bevorzugt ≤ 0.01, mehr bevorzugt ≤ 0.005). Das molare Verhältnis von NCO-Gruppen und Zerewitinoff-aktiven H-Atomen wird auch als NCO-Index oder Kennzahl bezeichnet. Als Träger von Zerewitinoff-aktiven H-Atomen kommen insbesondere Verbindungen mit O-H, N-H oder S-H-Bindungen in Frage. Alternativ oder zusätzlich kann dieser Umstand dadurch ausgedrückt werden, dass das Harz Verbindungen mit freien NCO-Gruppen in einer Menge von ≤ 20 Gewichts-% (bevorzugt ≤ 10 Gewichts-%, mehr bevorzugt ≤ 5 Gewichts-%), bezogen auf die Masse des Harzes, enthält.

In einer weiteren bevorzugten Ausführungsform weist die härtbare Komponente ein zahlenmittleres Molekulargewicht Mₙ von ≥ 200 g/mol bis ≤ 5000 g/mol auf. Vorzugsweise beträgt dieses Molekulargewicht ≥ 300 g/mol bis ≤ 4000 g/mol, mehr bevorzugt ≥ 400 g/mol bis ≤ 3000 g/mol.

In einer weiteren bevorzugten Ausführungsform umfasst in Schritt IV) das Behandeln des nach Schritt III) erhaltenen Vorläufers bei Bedingungen, die ausreichen, um im radikalisch vernetzten Harz des erhaltenen Vorläufers vorliegende NCO-Gruppen zumindest teilweise zu deblockieren und die dadurch erhaltenen funktionellen Gruppen mit Verbindungen mit mindestens zwei Zerewitinoff-aktiven H-Atomen zur Reaktion zu bringen, ein Erwärmen des Körpers auf eine Temperatur von ≥ 60°C. Vorzugsweise beträgt diese Temperatur ≥ 80 °C bis ≤ 250 °C, mehr bevorzugt ≥ 90 °C bis ≤ 190 °C. Die gewählte Temperatur oder der gewählte Temperaturbereich in Schritt IV) kann beispielsweise für ≥ 5 Minuten bis ≤ 48 Stunden, bevorzugt ≥ 15 Minuten bis ≤ 24 Stunden und mehr bevorzugt ≥ 1 Stunde bis ≤ 12 Stunden gehalten werden.

In einer weiteren bevorzugten Ausführungsform wird die Oberfläche des nach Schritt III) erhaltenen Vorläufers und/oder des nach Schritt IV) erhaltenen Gegenstands mit einer Zerewitinoff-aktive H-Atome aufweisenden Verbindung kontaktiert, wobei als natürliche Luftfeuchtigkeit in der den Vorläufer und/oder den Gegenstand umgebenden Atmosphäre vorkommendes Wasser ausgenommen ist. Bei einer Reaktion von noch verfügbaren blockierten oder deblockierten NCO-Gruppen mit diesen Verbindungen kann eine Funktionalisierung der Oberflächen erreicht werden. Die Zerewitinoff-aktive H-Atome aufweisende Verbindung kann beispielsweise durch Eintauchen, Aufsprühen oder Bestreichen mit der Oberfläche des Vorläufers in Kontakt gebracht werden. Eine weitere Möglichkeit ist die Kontaktierung über die Gasphase, beispielsweise mittels Ammoniak oder Wasserdampf. Optional kann ein Katalysator die Reaktion beschleunigen.

Beispiele für als Funktionalisierungsreagenz geeignete Verbindungen sind Alkohole, Amine, Säuren und ihre Derivate, Epoxide und insbesondere Polyole, wie zum Beispiel Zucker, Polyacrylatpolyole, Polyesterpolyole, Polyetherpolyole, Polyvinylalkohole, Polycarbonatpolyole, Polyethercarbonatpolyole und Polyestercarbonatpolyole. Weitere Beispiele sind Polyacrylsäure, Polyamide, Polysiloxane, Polyacrylamide, Polyvinylpyrrolidone, Polyvinylbutyrat, Polyketone, Polyetherketone, Polyacetale und Polyamine. Auch zur gezielten Ausbildung von Harnstoffen können Amine eingesetzt werden.

Vorzugsweise wird ein langkettiger Alkylalkohol, ein langkettiges (sekundäres) Alkylamin, eine Fettsäure, ein epoxidierter Fettsäureester, ein (per)fluorierter langkettiger Alkohol oder deren Mischungen eingesetzt. "Langkettig" ist hier als ab 6 C-Atomen, vorzugsweise ab 8 C-Atomen, mehr bevorzugt ab 10 C-Atomen in der längsten Kette der Verbindung zu verstehen. Die Herstellung von modifizierten Polyisocyanaten ist prinzipiell bekannt und beispielsweise in EP-A 0 206 059 und EP-A 0 540 985 beschrieben. Sie erfolgt vorzugsweise bei Temperaturen von 40 bis 180 °C.

In einer weiteren bevorzugten Ausführungsform weist das Verfahren die zusätzlichen Merkmale auf:
- der Träger ist innerhalb eines Behälters angeordnet und vertikal in Schwerkraftrichtung absenkbar,
- der Behälter enthält das radikalisch vernetzbare Harz bereitstellt,
- vor jedem Schritt II) wird der Träger um eine vorbestimmte Strecke abgesenkt, wobei über der in vertikaler Richtung gesehen obersten Lage des Aufbaumaterials sich eine Schicht des radikalisch vernetzbaren Harzes bildet und
- in Schritt II) belichtet und/oder bestrahlt ein Energiestrahl den ausgewählten Bereich der Schicht des radikalisch vernetzbaren Harzes, entsprechend dem jeweils ausgewählten Querschnitt des Gegenstandes.

Somit wird gemäß dieser Ausführungsform das additive Fertigungsverfahren der Stereolithographie (SLA) abgedeckt. Der Träger kann beispielsweise jeweils um eine vorbestimmte Strecke von ≥ 1 µm bis ≤ 500 µm abgesenkt werden.

In einer weiteren bevorzugten Ausführungsform weist das Verfahren die zusätzlichen Merkmale auf:
- der Träger ist innerhalb eines Behälters angeordnet und vertikal entgegen der Schwerkraftrichtung anhebbar,
- der Behälter stellt das radikalisch vernetzbare Harz bereit,
- vor jedem Schritt II) wird der Träger um eine vorbestimmte Strecke angehoben, so dass unter der in vertikaler Richtung gesehen untersten Lage des Aufbaumaterials sich eine Schicht des radikalisch vernetzbaren Harzes bildet und
- in Schritt II) belichtet und/oder bestrahlt eine Mehrzahl von Energiestrahlen den ausgewählten Bereich der Schicht des radikalisch vernetzbaren Harzes, entsprechend dem jeweils ausgewählten Querschnitt des Gegenstandes, gleichzeitig.

Somit wird gemäß dieser Ausführungsform das additive Fertigungsverfahren der DLP-Technologie abgedeckt, wenn die Mehrzahl von Energiestrahlen über ein Array von einzeln ansteuerbaren Mikrospiegeln das per Belichtung und/oder Bestrahlung bereitzustellende Bild erzeugen. Der Träger kann beispielsweise jeweils um eine vorbestimmte Strecke von ≥ 1 µm bis ≤ 500 µm angehoben werden.

In einer weiteren bevorzugten Ausführungsform Verfahren wird in Schritt I) das radikalisch vernetzbare Harz entsprechend dem ersten ausgewählten Querschnitt des Gegenstandes auf ein Substrat aufgetragen und in Schritt II) wird das radikalisch vernetzbare Harz entsprechend dem weiteren ausgewählten Querschnitt des Gegenstandes auf eine zuvor aufgetragene Lage des Aufbaumaterials aufgetragen. Anschließend wirkt wenigstens auf das radikalisch vernetzbare Harz Energie ein.

Somit wird gemäß dieser Ausführungsform das additive Fertigungsverfahren der Inkjet-Methode abgedeckt: es wird das vernetzbare Harz (gegebenenfalls separat von Katalysatoren) selektiv durch einen oder mehrere Druckköpfe aufgetragen und die anschließende Härtung durch Bestrahlen und/oder Belichtung kann unselektiv sein, beispielsweise durch eine UV-Lampe. Bei dem oder den Druckköpfen zum Auftragen des vernetzbaren Aufbaumaterials kann es sich um einen (modifizierten) Druckkopf für Tintenstrahldruckverfahren handeln. Der Träger kann vom Druckkopf weg bewegbar ausgestaltet sein oder der Druckkopf kann vom Träger weg bewegbar ausgestaltet sein. Die Inkremente der Abstandsbewegungen zwischen Träger und Druckkopf können beispielsweise in einem Bereich von ≥ 1 µm bis ≤ 2000 µm liegen.

Die Erfindung betrifft ebenfalls die Verwendung eines radikalisch vernetzbaren Harzes, welches eine Viskosität (23 °C, DIN EN ISO 2884-1) von ≥ 5 mPas bis ≤ 100000 mPas aufweist, in einem additiven Fertigungsverfahren, wobei das radikalisch vernetzbare Harz eine härtbare Komponente umfasst, in der mit einem Blockierungsmittel blockierte NCO-Gruppen, Verbindungen mit mindestens zwei Zerewitinoff-aktiven H-Atomen sowie olefinische C=C-Doppelbindungen vorliegen und wobei das Blockierungsmittel ein Isocyanat ist oder das Blockierungsmittel derart ausgewählt ist, dass nach Deblockierung der NCO-Gruppe keine Freisetzung des Blockierungsmittels als freies Molekül oder als Teil von anderen Molekülen oder Molekülteilen stattfindet.

In einer bevorzugten Ausführungsform der Verwendung umfasst das Harz weiterhin einen Radikalstarter und/oder einen Isocyanat-Trimerisierungskatalysator. Vorzugsweise ist der Radikalstarter ausgewählt aus der Gruppe: α-Hydroxyphenylketon, Benzyldimethylketal und/oder 2,4,6-Trimethylbenzoyldiphenylphosphinoxid
und/oder
der Isocyanurat-Trimerisierungskatalysator ist ausgewählt ist aus: Kaliumacetat, Kaliumacetat in Kombination mit einem Kronenether, Kaliumacetat in Kombination mit einem Polyethylenglykol, Kaliumacetat in Kombination mit einem Polypropylenglykol, Zinnoctoat, Trioctylphosphin und/oder Tributylzinnoxid.

Hinsichtlich der härtbaren Verbindung gelten bei der erfindungsgemäßen Verwendung die gleichen Überlegungen und bevorzugten Ausführungsformen wie zuvor in Hinblick auf das erfindungsgemäße Verfahren. Zur Vermeidung unnötiger Wiederholungen werden sie nicht erneut wiedergegeben. Es sei lediglich angemerkt, dass in einer weiteren bevorzugten Ausführungsform in der härtbaren Verbindung die olefinischen Doppelbindungen zumindest teilweise in Form von (Meth)Acrylatgruppen vorliegen und dass in einer weiteren bevorzugten Ausführungsform die härtbare Verbindung aus der Reaktion eines NCO-terminierten Polyisocyanats, bevorzugt Polyisocyanurats, mit einem, bezogen auf die freien NCO-Gruppen, molaren Unterschuss eines Hydroxyalkyl(meth)acrylats erhältlich ist.

In einer weiteren bevorzugten Ausführungsform der Verwendung umfasst das additive Fertigungsverfahren das Belichten und/oder Bestrahlen eines zuvor ausgewählten Bereichs oder aufgetragenen Bereichs des radikalisch vernetzbaren Harzes. Das additive Fertigungsverfahren kann beispielsweise ein Stereolithographie- oder ein DLP (digital light processing)-Verfahren sein. Ebenfalls kann es ein Inkjet-Verfahren sein. Unter "Belichten" wird hierbei die Einwirkung von Licht im Bereich zwischen nahem IR- und nahem UV-Licht (1400 nm bis 315 nm Wellenlänge) verstanden. Die übrigen kürzeren Wellenlängenbereiche werden durch den Begriff "Bestrahlen" abgedeckt, zum Beispiel fernes UV-Licht, Röntgenstrahlung, Gammastrahlung und auch Elektronenstrahlung.

Ein weiterer Gegenstand der Erfindung ist ein Polymer, erhältlich durch die Vernetzung eines radikalisch vernetzbaren Harzes, welches eine Viskosität (23 °C, DIN EN ISO 2884-1) von ≥ 5 mPas bis ≤ 100000 mPas aufweist, wobei das radikalisch vernetzbare Harz eine härtbare Komponente umfasst, in der mit einem Blockierungsmittel blockierte NCO-Gruppen, Verbindungen mit mindestens zwei Zerewitinoff-aktiven H-Atomen sowie olefinische C=C-Doppelbindungen vorliegen und wobei das Blockierungsmittel ein Isocyanat ist oder das Blockierungsmittel derart ausgewählt ist, dass nach Deblockierung der NCO-Gruppe keine Freisetzung des Blockierungsmittels als freies Molekül oder als Teil von anderen Molekülen oder Molekülteilen stattfindet. Zur Vermeidung unnötiger Wiederholungen wird hinsichtlich der Details zum radikalisch vernetzbaren Harz, der härtbaren Komponente, der Blockierungsmittel, der Polyisocyanate und der Verbindungen mit mindestens zwei Zerewitinoff-aktiven H-Atomen auf die vorstehenden Ausführungen verwiesen.

### Beispiele:

### Beispiel 1: Herstellung eines Prepolymers mit blockierten Isocyanaten und Acylatfunktionen.

In einem Glaskolben wurden 130,0 g des linearen Polypropylenetherpolyols Desmophen^{®} 1111BD bezogen von der Covestro Deutschland AG, Deutschland bei Raumtemperatur vorgelegt. Zum Polyol wurden zunächst 0,043 g Dibutylzinnlaurat bezogen von Sigma-Aldrich, Deutschland hinzugegeben und anschließend wurden 101,9 g des Hexamethylendiisocyanat-basierten Uretdions Desmodur^{®} XP 2730 bezogen von der Covestro Deutschland AG, Deutschland über einen Zeitraum von ca. 30 Minuten hinzugetropft. Anschließend wurd die Reaktionsmischung auf 80 °C mittels temperiertem Ölbad solange erhitzt, bis der theoretische Rest-NCO-Gehalt von 4,71 % erreicht wurde. Dazu wurden in regelmäßigen Abständen Proben aus dem Reaktionsgefäß gezogen und titrimetrisch nach DIN EN ISO 11909 bestimmt.

Nach Erreichen des theoretischen Rest-NCO-Gehalts, wurden 0,20 g des Inhibitors Butylhydroxytoluol bezogen von Sigma-Aldrich, Deutschland hinzugegeben und die Mischung für 15 Minuten homogenisiert. Nach Abkühlen auf 50°C wurden dann 33,8 g Hydroxyethylmethacrylat bezogen von Sigma-Aldrich, Deutschland hinzugetropft und die Mischung so lange weitergerührt, bis ein Rest-NCO-Gehalt von 0 % erreicht wurde. Anschließend wurden 143,2 g Isobornylacrylat (IBOA) bezogen von Sigma-Aldrich, Deutschland hinzugegeben und die Mischung auf Raumtemperatur abkühlen gelassen. Bis zur weiteren Verwendung wurde das Prepolymer in Metalldosen abgefüllt und bei Raumtemperatur gelagert.

Das Prepolymer nach Beispiel 1 wurde zum einen ohne Zusatz von Amin als Vernetzungsmittel als Vergleichsbeispiel genutzt.

In Kombination mit Aminen wie in den folgenden Beispielen erläutert als Grundlage für erfindungsgemäße Harze.

### Beispiel 2: Herstellung eines radikalisch vernetzbaren Harzes mit 20 % Vernetzer IPDA

In einem Kunststoffbecher mit Deckel wurden 100,0 g des Prepolymers aus Beispiel 1 und 3,00 g des Photoinitiators Omnirad^{®} 1173 von IGM Resins eingewogen. Diese Einsatzstoffe wurden in einem Planetenkreiselmischer Thinky ARE250 bei Raumtemperatur für ca. 2 Minuten bei einer Umdrehungszahl von 2000 Umdrehungen pro Minute vermischt. Anschließend wurden 2,17 g des difunktionellen Vernetzers Isophorondiamin (IPDA) bezogen von der Covestro Deutschland AG, Deutschland hinzugegeben und mit einem Spatel händisch vermischt. Stöchiometrisch waren mit diesen Mengen in der Mischung Amingruppen und Uretdiongruppen im Verhältnis 1:5 enthalten.

### Beispiel 3: Herstellung eines radikalisch vernetzbaren Harzes mit 20 % Vernetzer Jeffamine T403

In einem Kunststoffbecher mit Deckel wurden 100,0 g des Prepolymers aus Beispiel 1 und 3,00 g des Photoinitiators Omnirad^{®} 1173 wie in Beispiel 2 eingewogen und vermischt. Anschließend wurden 3,72 g des trifunktionellen Vernetzers Jeffamine^{®} T403 bezogen von Sigma-Aldrich, Deutschland hinzugegeben und mit einem Spatel händisch vermischt. Stöchiometrisch waren mit diesen Mengen in der Mischung Amingruppen und Uretdiongruppen im Verhältnis 1:5 enthalten.

### Beispiel 4: Herstellung eines radikalisch vernetzbaren Harzes mit 30 % Vernetzer Jeffamine T403

In einem Kunststoffbecher mit Deckel wurden 100,0 g des Prepolymers aus Beispiel 1 und 3,00 g des Photoinitiators Omnirad^{®} 1173 wie in Beispiel 2 eingewogen und vermischt. Anschließend wurden 5,59 g des trifunktionellen Vernetzers Jeffamine^{®} T403 hinzugegeben und mit einem Spatel händisch vermischt. Stöchiometrisch waren mit diesen Mengen in der Mischung Amingruppen und Uretdiongruppen im Verhältnis 3:10 enthalten.

### Beispiel 5: Härtung eines radikalisch vernetzbaren Harzes

Die radikalisch härtbaren Harze aus den Beispielen 1 bis 4 wurden mit einer Rakel mit einem Spalt von 400 µm auf eine Glasplatte aufgezogen. Die Glasplatte wurde vorab mit einer 1%-igen Lösung von Sojalecithin in Ethylacetat behandelt und getrocknet. Das Sojalecithin wirkte als Trennmittel, um später die gehärteten Filme wieder von Substrat lösen zu können.

Die beschichteten Glassubstrate wurden anschließend in einer UV-Härtungsanlage der Firma Superfici mit Quecksilber- und Gallium-Strahlungsquellen mit einer Bandgeschwindigkeit von 5 m/min gehärtet. Aus Lampenleistung und Bandgeschwindigkeit resultiert eine Strahlungsintensität von 1.300 mJ/cm², die auf die beschichteten Substrate einwirkte.

Anschließend wurden die UV-gehärteten Filme auf den Glassubstraten für 60 Minuten in einen Trockenofen bei 120 °C unter Luftatmosphäre nachgehärtet. Für einige Filme erfolgte die Härtung statt bei 120 °C bei 150 °C, um den Einfluss der Temperatur zu untersuchen.

Nach Abkühlen auf Raumtemperatur wurden die gehärteten Filme vorsichtig von den Glassubstraten abgezogen, um Probekörper für die mechanische und thermische Charakterisierung vorzubereiten.

### Beispiel 6: Charakterisierung eines vernetzten Harzes

Die freitragenden, gehärteten Filme aus Beispiel 5 wurden für die mechanische Charakterisierung mit einer Stanze in Zug-Test-Probenkörper des Typs S2 gemäß DIN EN ISO 527 präpariert. Jeweils 5 Probenkörper eines Films wurden gemäß DIN EN ISO 527 untersucht. Die gemittelten Ergebnisse für Bruchdehnung, Zugfestigkeit und E-Modul sind in Tabelle 1 zusammengefasst.

Für die thermische Charakterisierung wurde eine kleine Probe von ca. 10 mg der gehärteten Filme mittels Dynamisch Differenz-Thermoanalyse (DSC) nach DIN EN ISO 11357-1 untersucht. Die aus der DSC ermittelten Glasübergangstemperaturen (T_{G}) sind auch in Tabelle 1 für alle Filme der Beispiele zusammengefasst. Anmerkung: Für die Filme wurden mittels DSC zwei Glasübergangstemperaturen ermittelt.

| Tabelle 1: Mechanisc he und thermische Eigenschaf ten der radikalisch gehärteten HarzeBeisp iel-Nummer | Verhältnis Amin: Uretdion | Nachhärtung s-temperatur [°C] | Bruchdehnung [%] | Zugfestigkeit [MPa] | E-Modul [MPa] | T_{G} [°C] |
|---|---|---|---|---|---|---|
| 1 (Vergleichsbeispiel) | 0 | Raumtemperatur | 94 | 9,6 | 26 | -20/+8 |
| 2 | 1:5 | 120 | 80 | 17,0 | 143 | -14/+23 |
| 2 | 1:5 | 150 | 78 | 16,8 | 141 | -6,5/+ 31,5 |
| 3 | 1:5 | 120 | 85 | 13,5 | 81,4 | -8 / +26 |
| 3 | 1:5 | 150 | 72 | 11,0 | 98,4 | -13/+20 |
| 4 | 3:10 | 120 | 65 | 12,0 | 110 | -6,5/+30 |
| 4 | 3:10 | 150 | 72 | 12,6 | 95,6 | -20/+8 |

Die erfindungsgemäßen Beispiele 2 bis 4 zeigen im Vergleich zum nicht erfindungsgemäßen Beispiel 1 eine deutlich erhöhte Zugfestigkeit und Modul wobei die Bruchdehnung auf einem vergleichbaren Niveau bleibt.

### Beispiel 7: Untersuchung der Uretdion-Öffnung mittels IR-Spektroskopie

Um die Öffnung des Uretdion-Rings und Reaktion der deblockierten Isocyanat-Gruppen mit den Amin-Gruppen während der Ofenhärtung zu untersuchen, wurde ein Film nach Beispiel 2 vor und nach der Ofenhärtung mittels IR-Spektroskopie untersucht. Für die Messung wurde ein FT- IR-Spektrometer (Tensor II) der Fa. Bruker eingesetzt. Der Probenfilm wurde mit der Platinum- ATR-Einheit kontaktiert. Die kontaktierte Fläche der Probe war 2 × 2 mm. Bei der Messung drang die IR-Strahlung je nach Wellenzahl 3 bis 4 µm in die Probe ein. Von der Probe wurde dann ein Absorptionsspektrum erstellt. Um eine ungleichmäßige Kontaktierung der unterschiedlich harten Proben zu kompensieren, wurde an allen Spektren eine Grundlinienkorrektur durchgeführt und eine Normierung im Wellenzahlbereich 2600-3200 (CH2, CH3). Die Interpolation der Uretdion-Gruppe wurde im Wellenzahlbereich von 1786-1750 cm⁻¹ durchgeführt (C=O-Schwingung). Die integrierten Flächen unter den Signalen von Uretdion-Gruppen sind in Tabelle 2 zusammengefasst:

**Tabelle 2:**

| | Signalfläche Uretdion |
|---|---|
| Vor Ofenhärtung | 26,797 |
| Nach Ofenhärtung | 15,105 |

Anhand der Abnahme der zu Uretdion zugehörigen Signalflächen kann auf eine Deblockierung der Isocyanat-Gruppen durch Ringöffnung mit Vernetzungsreaktion der deblockierten Isocyanat-Gruppen mit Amin geschlossen werden.

## Patentansprüche

1. Verfahren zur Herstellung eines Gegenstandes aus einem Vorläufer, umfassend die Schritte:
I) Abscheiden eines radikalisch vernetzten Harzes auf einem Träger, so dass eine Lage eines mit dem Träger verbundenen Aufbaumaterials erhalten wird, welche einem ersten ausgewählten Querschnitt des Vorläufers entspricht;
II) Abscheiden eines radikalisch vernetzten Harzes auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist;
III) Wiederholen des Schritts II), bis der Vorläufer gebildet ist;
wobei das Abscheiden eines radikalisch vernetzten Harzes wenigstens in Schritt II) durch Einwirken von Energie auf einen ausgewählten Bereich eines radikalisch vernetzbaren Harzes, entsprechend dem jeweils ausgewählten Querschnitt des Gegenstandes, erfolgt und
wobei das radikalisch vernetzbare Harz eine Viskosität (23 °C, DIN EN ISO 2884-1) von ≥ 5 mPas bis ≤ 100000 mPas aufweist,
**dadurch gekennzeichnet, dass**
das radikalisch vernetzbare Harz eine härtbare Komponente umfasst, in der mit einem Blockierungsmittel blockierte NCO-Gruppen, Verbindungen mit mindestens zwei Zerewitinoff-aktiven H-Atomen sowie olefinische C=C-Doppelbindungen vorliegen,
wobei das Blockierungsmittel ein Isocyanat ist oder das Blockierungsmittel derart ausgewählt ist, dass nach Deblockierung der NCO-Gruppe keine Freisetzung des Blockierungsmittels als freies Molekül oder als Teil von anderen Molekülen oder Molekülteilen stattfindet
und dass nach Schritt III) weiterhin Schritt IV) durchgeführt wird:
IV) Behandeln des nach Schritt III) erhaltenen Vorläufers bei Bedingungen, die ausreichen, um im radikalisch vernetzten Harz des erhaltenen Vorläufers vorliegende NCO-Gruppen zumindest teilweise zu deblockieren und die dadurch erhaltenen funktionellen Gruppen mit Verbindungen mit mindestens zwei Zerewitinoff-aktiven H-Atomen zur Reaktion zu bringen, so dass der Gegenstand erhalten wird.

2. Verfahren gemäß Anspruch 1, wobei das Blockierungsmittel ausgewählt ist aus der Gruppe bestehend aus organischen Isocyanaten, Lactamen, Glycerincarbonat, einer Verbindung gemäß der allgemeinen Formel (I): 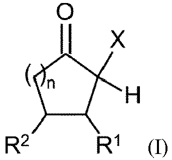 in welcher X eine elektronenziehende Gruppe, R¹ und R² unabhängig voneinander die Reste H, C - C₂₀-(Cyclo)alkyl, C₆-C₂₄-Aryl, C₁-C₂₀-(Cyclo)alkylester oder -amid, C₆-C₂₄-Arylester oder -amid, gemischt aliphatisch/aromatische Reste mit 1 bis 24 Kohlenstoffatomen, die auch Teil eines 4 bis 8-gliedrigen Ringes sein können, darstellen und n eine ganze Zahl von 0 bis 5 ist,
oder einer Kombination aus mindestens zwei hiervon.

3. Verfahren gemäß Anspruch 1 oder 2, wobei in der härtbaren Komponente die Verbindungen mit mindestens zwei Zerewitinoff-aktiven H-Atomen ausgewählt sind aus der Gruppe bestehend aus Polyaminen, Polyolen oder einer Kombination hiervon.

4. Verfahren gemäß einem der Ansprüche 1 bis 3, wobei die härtbare Komponente eine härtbare Verbindung umfasst, welche mit dem Blockierungsmittel blockierte NCO-Gruppen und olefinische C=C-Doppelbindungen aufweist.

5. Verfahren gemäß einem der Ansprüche 1 bis 4, wobei das radikalisch vernetzbare Harz weiterhin einen Radikalstarter umfasst.

6. Verfahren gemäß Anspruch 5, wobei der Radikalstarter ausgewählt ist aus der Gruppe: α-Hydroxyphenylketon, Benzyldimethylketal, Bis-(4-methoxybenzoyl)diethylgerman und/oder 2,4,6-Trimethylbenzoyldiphenylphosphinoxid.

7. Verfahren gemäß einem der Ansprüche 1 bis 6, wobei in dem Harz das molare Verhältnis von freien NCO-Gruppen zu Zerewitinoff-aktiven H-Atomen ≤ 0.05 beträgt.

8. Verfahren gemäß einem der Ansprüche 1 bis 7, wobei in Schritt IV) das Behandeln des nach Schritt III) erhaltenen Vorläufers bei Bedingungen, die ausreichen, um im radikalisch vernetzten Harz des erhaltenen Vorläufers vorliegende NCO-Gruppen zumindest teilweise zu deblockieren und die dadurch erhaltenen funktionellen Gruppen mit Verbindungen mit mindestens zwei Zerewitinoff-aktiven H-Atomen zur Reaktion zu bringen, ein Erwärmen des Körpers auf eine Temperatur von ≥ 60°C umfasst.

9. Verfahren gemäß einem der Ansprüche 1 bis 8, wobei die Oberfläche des nach Schritt III) erhaltenen Vorläufers und/oder des nach Schritt IV) erhaltenen Gegenstands mit einer Zerewitinoff-aktive H-Atome aufweisenden Verbindung kontaktiert wird, wobei als natürliche Luftfeuchtigkeit in der den Vorläufer und/oder den Gegenstand umgebenden Atmosphäre vorkommendes Wasser ausgenommen ist.

10. Verfahren gemäß einem der Ansprüche 1 bis 9, wobei:
- der Träger innerhalb eines Behälters angeordnet ist und vertikal in Schwerkraftrichtung absenkbar ist,
- der Behälter das radikalisch vernetzbare Harz bereitstellt,
- vor jedem Schritt II) der Träger um eine vorbestimmte Strecke abgesenkt wird, wobei über der in vertikaler Richtung gesehen obersten Lage des Aufbaumaterials sich eine Schicht des radikalisch vernetzbaren Harzes bildet und
- in Schritt II) ein Energiestrahl den ausgewählten Bereich der Schicht des radikalisch vernetzbaren Harzes, entsprechend dem jeweils ausgewählten Querschnitt des Gegenstandes, belichtet und/oder bestrahlt.

11. Verfahren gemäß einem der Ansprüche 1 bis 9, wobei:
- der Träger innerhalb eines Behälters angeordnet ist und vertikal entgegen der Schwerkraftrichtung anhebbar ist,
- der Behälter das radikalisch vernetzbare Harz bereitstellt,
- vor jedem Schritt II) der Träger um eine vorbestimmte Strecke angehoben wird, so dass unter der in vertikaler Richtung gesehen untersten Lage des Aufbaumaterials sich eine Schicht des radikalisch vernetzbaren Harzes bildet und
- in Schritt II) eine Mehrzahl von Energiestrahlen den ausgewählten Bereich der Schicht des radikalisch vernetzbaren Harzes, entsprechend dem jeweils ausgewählten Querschnitt des Gegenstandes, gleichzeitig belichtet und/oder bestrahlt.

12. Verfahren gemäß einem der Ansprüche 1 bis 9, wobei in Schritt I) das radikalisch vernetzbare Harz entsprechend dem ersten ausgewählten Querschnitt des Gegenstandes auf ein Substrat aufgetragen wird und in Schritt II) das radikalisch vernetzbare Harz entsprechend dem weiteren ausgewählten Querschnitt des Gegenstandes auf eine zuvor aufgetragene Lage des Aufbaumaterials aufgetragen wird und anschließend wenigstens auf das radikalisch vernetzbare Harz Energie einwirkt.

13. Verwendung eines radikalisch vernetzbaren Harzes, welches eine Viskosität (23 °C, DIN EN ISO 2884-1) von ≥ 5 mPas bis ≤ 100000 mPas aufweist, in einem additiven Fertigungsverfahren,
**dadurch gekennzeichnet, dass**
das radikalisch vernetzbare Harz eine härtbare Komponente umfasst, in der mit einem Blockierungsmittel blockierte NCO-Gruppen, Verbindungen mit mindestens zwei Zerewitinoff-aktiven H-Atomen sowie olefinische C=C-Doppelbindungen vorliegen,
wobei das Blockierungsmittel ein Isocyanat ist oder das Blockierungsmittel derart ausgewählt ist, dass nach Deblockierung der NCO-Gruppe keine Freisetzung des Blockierungsmittels als freies Molekül oder als Teil von anderen Molekülen oder Molekülteilen stattfindet.

14. Verwendung gemäß Anspruch 13, wobei das additive Fertigungsverfahren das Belichten und/oder Bestrahlen eines zuvor ausgewählten Bereichs oder aufgetragenen Bereichs des radikalisch vernetzbaren Harzes umfasst.

15. Polymer, erhältlich durch die Vernetzung eines radikalisch vernetzbaren Harzes, welches eine Viskosität (23 °C, DIN EN ISO 2884-1) von ≥ 5 mPas bis ≤ 100000 mPas aufweist,
**dadurch gekennzeichnet, dass**
das radikalisch vernetzbare Harz eine härtbare Komponente umfasst, in der mit einem Blockierungsmittel blockierte NCO-Gruppen, Verbindungen mit mindestens zwei Zerewitinoff-aktiven H-Atomen sowie olefinische C=C-Doppelbindungen vorliegen,
wobei das Blockierungsmittel ein Isocyanat ist oder das Blockierungsmittel derart ausgewählt ist, dass nach Deblockierung der NCO-Gruppe keine Freisetzung des Blockierungsmittels als freies Molekül oder als Teil von anderen Molekülen oder Molekülteilen stattfindet.

## Claims

1. A process for producing an object from a precursor, comprising the steps of:
I) depositing a radically crosslinked resin atop a carrier to obtain a ply of a construction material joined to the carrier which corresponds to a first selected cross section of the precursor;
II) depositing a radically crosslinked resin atop a previously applied ply of the construction material to obtain a further ply of the construction material which corresponds to a further selected cross section of the precursor and which is joined to the previously applied ply;
III) repeating step II) until the precursor is formed;
wherein the depositing of a radically crosslinked resin at least in step II) is effected by introducing energy to a selected region of a radically crosslinkable resin corresponding to the respectively selected cross section of the object, and
wherein the radically crosslinkable resin has a viscosity (23°C, DIN EN ISO 2884-1) of ≥ 5 mPas to ≤ 100 000 mPas,
**characterized in that**
the radically crosslinkable resin comprises a curable component, in which NCO groups blocked with a blocking agent, compounds having at least two Zerewitinoff-active H atoms and olefinic C=C double bonds are present,
wherein the blocking agent is an isocyanate or the blocking agent is selected such that deblocking of the NCO group is not followed by liberation of the blocking agent as a free molecule or as a part of other molecules or moieties
and **in that** step III) is followed by a further step IV):
IV) treating the precursor obtained after step III) under conditions sufficient for at least partially deblocking NCO groups present in the radically crosslinked resin of the obtained precursor and reacting the thus obtained functional groups with compounds having at least two Zerewitinoff-active H atoms to obtain the object.

2. The process as claimed in claim 1, wherein the blocking agent is selected from the group consisting of organic isocyanates, lactams, glycerol carbonate, a compound of general formula (I): 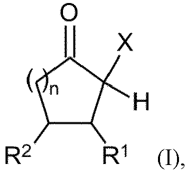 in which X is an electron-withdrawing group, R¹ and R² independently of one another represent the residues H, C₁-C₂₀-(cyclo)alkyl, C₆-C₂₄-aryl, C₁-C₂₀-(cyclo)alkyl ester or -amide, C₆-C₂₄-aryl ester or amide, mixed aliphatic/aromatic radicals having 1 to 24 carbon atoms which can also be part of a 4 to 8-membered ring and n is an integer from 0 to 5
or a combination of at least two of these.

3. The process as claimed in claim 1 or 2, wherein the compounds having at least two Zerewitinoff-active H atoms in the curable component are selected from the group consisting of polyamines, polyols or a combination thereof.

4. The process as claimed in any of claims 1 to 3, wherein the curable component comprises a curable compound which has NCO groups blocked with the blocking agent and olefinic C=C double bonds.

5. The process as claimed in any of claims 1 to 4, wherein the radically crosslinkable resin further comprises a radical starter.

6. The process as claimed in claim 5, wherein the radical starter is selected from the group: α-hydroxyphenylketone, benzyldimethylketal, bis(4-methoxybenzoyl)diethylgermanium and/or 2,4,6-trimethylbenzoyldiphenylphosphine oxide.

7. The process as claimed in any of claims 1 to 6, wherein the molar ratio of free NCO groups to Zerewitinoff-active H atoms in the resin is ≤ 0.05.

8. The process as claimed in any of claims 1 to 7, wherein in step IV) the treating of the precursor obtained after step III) under conditions sufficient for at least partially deblocking NCO groups present in the radically crosslinked resin of the obtained precursor and reacting the thus obtained functional groups with compounds having at least two Zerewitinoff-active H atoms comprises a heating of the body to a temperature of ≥ 60°C.

9. The process as claimed in any of claims 1 to 8, wherein the surface of the precursor obtained after step III) and/or of the object obtained after step IV) is contacted with a compound having Zerewitinoff-active H atoms, wherein water occurring as natural atmospheric humidity in the atmosphere surrounding the precursor and/or the object is excluded.

10. The process as claimed in any of claims 1 to 9, wherein:
- the carrier is arranged inside a container and is vertically lowerable in the direction of the gravitational force,
- the container provides the radically crosslinkable resin,
- before each step II) the carrier is lowered by a predetermined distance so that above the uppermost ply of the construction material viewed in the vertical direction a layer of the radically crosslinkable resin is formed and
- in step II) an energy beam exposes and/or irradiates the selected region of the layer of the radically crosslinkable resin corresponding to the respectively selected cross section of the object.

11. The process as claimed in any of claims 1 to 9, wherein:
- the carrier is arranged inside a container and is vertically raisable counter to the direction of the gravitational force,
- the container provides the radically crosslinkable resin,
- before each step II) the carrier is raised by a predetermined distance so that below the lowermost ply of the construction material viewed in the vertical direction a layer of the radically crosslinkable resin is formed and
- in step II) a plurality of energy beams simultaneously exposes and/or irradiates the selected region of the layer of the radically crosslinkable resin corresponding to the respectively selected cross section of the object.

12. The process as claimed in any of claims 1 to 9, wherein in step I) the radically crosslinkable resin corresponding to the first selected cross section of the object is applied atop a substrate and in step II) the radically crosslinkable resin corresponding to the further selected cross section of the object is applied atop a previously applied ply of the construction material and this is followed by introduction of energy to at least the radically crosslinkable resin.

13. The use of a radically crosslinkable resin having a viscosity (23°C, DIN EN ISO 2884-1) of ≥ 5 mPas to ≤ 100 000 mPas in an additive manufacturing process,
**characterized in that**
the radically crosslinkable resin comprises a curable component, in which NCO groups blocked with a blocking agent, compounds having at least two Zerewitinoff-active H atoms and olefinic C=C double bonds are present,
wherein the blocking agent is an isocyanate or the blocking agent is selected such that deblocking of the NCO group is not followed by liberation of the blocking agent as a free molecule or as a part of other molecules or moieties.

14. The use as claimed in claim 13, wherein the additive manufacturing process comprises the exposure and/or irradiation of a previously selected region or applied region of the radically crosslinkable resin.

15. A polymer obtainable by the crosslinking of a radically crosslinkable resin having a viscosity (23°C, DIN EN ISO 2884-1) of ≥ 5 mPas to ≤ 100 000 mPas,
**characterized in that**
the radically crosslinkable resin comprises a curable component, in which NCO groups blocked with a blocking agent, compounds having at least two Zerewitinoff-active H atoms and olefinic C=C double bonds are present,
wherein the blocking agent is an isocyanate or the blocking agent is selected such that deblocking of the NCO group is not followed by liberation of the blocking agent as a free molecule or as a part of other molecules or moieties.

## Revendications

1. Procédé de fabrication d'un objet à partir d'un précurseur, comprenant les étapes :
I) dépôt d'une résine réticulée par voie radicalaire sur un support, de manière à obtenir une couche d'un matériau de construction lié au support, laquelle couche correspond à une première section transversale sélectionnée du précurseur ;
II) dépôt d'une résine réticulée par voie radicalaire sur une couche appliquée au préalable du matériau de construction de manière à obtenir une autre couche du matériau de construction qui correspond à une autre section transversale sélectionnée du précurseur et qui est liée à la couche appliquée au préalable ;
III) répétition de l'étape II) jusqu'à ce que le précurseur soit formé ;
le dépôt d'une résine réticulée par voie radicalaire ayant lieu, au moins dans l'étape II), par action d'énergie sur une zone sélectionnée d'une résine réticulable par voie radicalaire, conformément à la section transversale sélectionnée respective de l'objet, et
la résine réticulable par voie radicalaire présentant une viscosité (23°C, DIN EN ISO 2884-1) de ≥ 5 mPa.s à ≤ 100.000 mPa.s,
**caractérisé en ce que**
la résine réticulable par voie radicalaire comprend un composant durcissable, dans lequel des groupes NCO bloqués par un agent de blocage, des composés présentant au moins deux atomes d'H actifs selon Zerewitinoff ainsi que des doubles liaisons C=C oléfiniques sont présents,
l'agent de blocage étant un isocyanate ou l'agent de blocage étant choisi de manière telle qu'après un déblocage des groupes NCO aucune libération de l'agent de blocage en tant que molécule libre ou en tant que partie d'autres molécules ou de parties de molécule ne se produit
et **en ce qu'**en outre, une étape IV) est réalisée après l'étape III) :
IV) traitement du précurseur obtenu après l'étape III) dans des conditions qui suffisent pour débloquer au moins partiellement des groupes NCO se trouvant dans la résine réticulée par voie radicalaire du précurseur obtenu et pour faire réagir les groupes fonctionnels ainsi obtenus avec des composés présentant au moins deux atomes d'H actifs selon Zerewitinoff, de manière telle que l'objet est obtenu.

2. Procédé selon la revendication 1, l'agent de blocage étant sélectionné dans le groupe constitué par les isocyanates organiques, les lactames, le carbonate de glycérol, un composé selon la formule générale (I) : 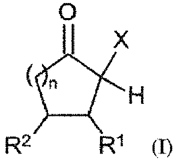 dans laquelle X représente un groupe attracteur d'électrons, R¹ et R² représentent, indépendamment l'un de l'autre, les résidus H, C₁-C₂₀-(cyclo)alkyle, C₆-C₂₄-aryle, ester ou amide de C₁-C₂₀-(cyclo) alkyle, ester ou amide de C₆-C₂₄-aryle, des radicaux aliphatiques/aromatiques mixtes comprenant 1 à 24 atomes de carbone, qui peuvent également faire partie d'un cycle de 4 à 8 chaînons, et n représente un nombre entier de 0 à 5,
ou une combinaison d'au moins deux de ceux-ci.

3. Procédé selon la revendication 1 ou 2, où, dans le composant durcissable, les composés présentant au moins deux atomes d'H actifs selon Zerewitinoff sont sélectionnés dans le groupe constitué par les polyamines, les polyols ou une combinaison de ceux-ci.

4. Procédé selon l'une quelconque des revendications 1 à 3, le composant durcissable comprenant un composé durcissable qui présente des groupes NCO bloqués par l'agent de blocage et des doubles liaisons C=C oléfiniques.

5. Procédé selon l'une quelconque des revendications 1 à 4, la résine réticulable par voie radicalaire comprenant en outre un initiateur de radicaux.

6. Procédé selon la revendication 5, l'initiateur de radicaux étant sélectionné dans le groupe : α-hydroxyphénylcétone, benzyldiméthylcétal, bis-(4-méthoxybenzoyl)diéthylgermanium et/ou phosphinoxyde de 2,4,6-triméthylbenzoyldiphényle.

7. Procédé selon l'une quelconque des revendications 1 à 6, où, dans la résine, le rapport molaire de groupes NCO libres aux atomes d'H actifs selon Zerewitinoff est ≤ 0,05.

8. Procédé selon l'une quelconque des revendications 1 à 7, ou, dans l'étape IV), le traitement du précurseur obtenu après l'étape III) dans des conditions qui suffisent pour débloquer au moins partiellement des groupes NCO se trouvant dans la résine réticulée par voie radicalaire du précurseur obtenu et pour faire réagir les groupes fonctionnels ainsi obtenus avec des composés présentant au moins deux atomes d'H actifs selon Zerewitinoff, comprend un chauffage du corps à une température ≥ 60°C.

9. Procédé selon l'une quelconque des revendications 1 à 8, la surface du précurseur obtenu après l'étape III) et/ou de l'objet obtenu après l'étape IV) étant mise en contact avec un composé présentant des atomes d'H actifs selon Zerewitinoff, l'eau se trouvant dans l'atmosphère entourant le précurseur et/ou l'objet en tant qu'humidité naturelle de l'air étant exclue.

10. Procédé selon l'une quelconque des revendications 1 à 9, dans lequel :
- le support est disposé dans un récipient et peut être abaissé verticalement dans le sens de la gravité,
- le récipient met à disposition la résine réticulable par voie radicalaire,
- avant chaque étape II), le support est abaissé d'une distance définie, une couche de la résine réticulable par voie radicalaire se formant sur la couche supérieure du matériau de construction, vu dans la direction verticale et
- dans l'étape II), un rayon d'énergie éclaire et/ou irradie la zone sélectionnée de la couche de la résine réticulable par voie radicalaire, conformément à la section transversale respective sélectionnée de l'objet.

11. Procédé selon l'une quelconque des revendications 1 à 9, dans lequel :
- le support est disposé dans un récipient et peut être soulevé verticalement à l'opposé du sens de la gravité,
- le récipient met à disposition la résine réticulable par voie radicalaire,
- avant chaque étape II), le support est soulevé d'une distance définie, de telle sorte qu'une couche de la résine réticulable par voie radicalaire se formant sous la couche supérieure du matériau de construction, vu dans la direction verticale et
- dans l'étape II), une multitude de rayons énergétiques éclairent et/ou irradient simultanément la zone sélectionnée de la couche de la résine réticulable par voie radicalaire, conformément à la section transversale respective sélectionnée de l'objet.

12. Procédé selon l'une quelconque des revendications 1 à 9, où, dans l'étape I), la résine réticulable par voie radicalaire est appliquée conformément à la première section transversale sélectionnée de l'objet sur un substrat et, dans l'étape II), la résine réticulable par voie radicalaire est appliquée conformément à l'autre section transversale sélectionnée de l'objet sur une couche appliquée du matériau de construction et de l'énergie agit ensuite au moins sur la résine réticulable par voie radicalaire.

13. Utilisation d'une résine réticulable par voie radicalaire, qui présente une viscosité (23°C, DIN EN ISO 2884-1) de ≥ 5 mPa.s à ≤ 100.000 mPa.s, dans un procédé de fabrication additive,
**caractérisée en ce que**
la résine réticulable par voie radicalaire comprend un composant durcissable, dans lequel des groupes NCO bloqués par un agent de blocage, des composés présentant au moins deux atomes d'H actifs selon Zerewitinoff ainsi que des doubles liaisons C=C oléfiniques sont présents,
l'agent de blocage étant un isocyanate ou l'agent de blocage étant choisi de manière telle qu'après un déblocage des groupes NCO aucune libération de l'agent de blocage en tant que molécule libre ou en tant que partie d'autres molécules ou de parties de molécule ne se produit.

14. Utilisation selon la revendication 13, le procédé de fabrication additive comprenant l'éclairage et/ou l'irradiation d'une zone sélectionnée au préalable ou d'une zone appliquée de la résine réticulable par voie radicalaire.

15. Polymère, pouvant être obtenu par la réticulation d'une résine réticulable par voie radicalaire, qui présente une viscosité (23°C, DIN EN ISO 2884-1) de ≥ 5 mPa.s à ≤ 100.000 mPa.s,
**caractérisé en ce que**
la résine réticulable par voie radicalaire comprend un composant durcissable, dans lequel des groupes NCO bloqués par un agent de blocage, des composés présentant au moins deux atomes d'H actifs selon Zerewitinoff ainsi que des doubles liaisons C=C oléfiniques sont présents,
l'agent de blocage étant un isocyanate ou l'agent de blocage étant choisi de manière telle qu'après un déblocage des groupes NCO aucune libération de l'agent de blocage en tant que molécule libre ou en tant que partie d'autres molécules ou de parties de molécule ne se produit.
